# EUROPEAN PATENT SPECIFICATION

(11) **EP 4 297 573 B1**
(45) Date of publication and mention of the grant of the patent: **21.01.2026**
(21) Application number: 22707828.4
(22) Date of filing: 24.02.2022
(51) Int. Cl.: A01N 47/30, A01N 47/36, A01P 21/00

(54) **AGRICULTURAL COMPOSITION FOR ENHANCED SILICON UPTAKE AND DISTRIBUTION IN PLANTS**
LANDWIRTSCHAFTLICHE ZUSAMMENSETZUNG ZUR SILIZIUM AUFNAHME- UND VERTEILUNGSSTEIGERUNG IN PFLANZEN
COMPOSITION AGRICOLE POUR L'AMÉLIORATION DE L'ABSORPTION ET DE LA DISTRIBUTION DE SILICIUM DANS LES PLANTES

(30) Priority: 26.02.2021 GB 202102806
(43) Date of publication of application: 03.01.2024
(73) Proprietor: Levity Crop Science Limited, Lancashire PR2 0RY (GB)
(72) Inventor: MARKS, David, Woodplumpton Lancashire PR4 0AS (GB); WESTON, Anna, Woodplumpton Lancashire PR4 0AS (GB)
(74) Representative: Wilson Gunn
(86) International application number: PCT/GB2022/050503
(87) International publication number: WO 2022/180396

(56) References cited:
- CN-B- 106 831 494
- GB-A- 1 331 376
- US-A- 3 031 292
- US-A1- 2020 079 702

## Description

### Technical Field of the Invention

The present invention relates to an agricultural composition for improving silicon uptake and distribution in plants, to a method for preparing the same, to a formulation comprising the agricultural composition, to a method of supplying silicon to plants and to the use of the agricultural composition as a fertiliser.

### Background to the Invention

Plants need a range of nutrients for healthy growth. These include macronutrients such as nitrogen, phosphorus, potassium, carbon and water, secondary nutrients such as calcium, magnesium, sodium, chloride and sulphur, as well as micronutrients, which include copper, cobalt, iron, manganese, boron, molybdenum, zinc, silicon and nickel.

Soils typically contain more than 50% silicon with the majority being in the form of oxides and clay colloids, meaning most of the silicon in soil is not plant available. Of the silicon that is available, typically as H₄SiO₄ (Silicic acid) in soil solution, plants must compete with bacteria and diatoms for access to the pool of soluble silicon.

Plants also vary is their ability to take up silicon. "Strong accumulators" are plants which take up silicon at a higher level than present in the transpiration stream e.g., rice and sugar cane. "Intermediate accumulators" are those which take up silicon at the same level present in soil solution. e.g., wheat barley and most monocots, whereas "weak accumulators" are plants which take up silicon at lower levels than are present in soil solution. Most dicots are weak accumulators.

Silicon is known to form crystal layers called 'opals' made of amorphous silica in the cuticle. Opals confer physical strength protecting against pest and disease attack and preventing water loss. Silicon is also known to be responsible for triggering a range of metabolic functions which allows plants to cope and survive in response to abiotic stressors such as drought, lodging, extreme temperatures (low and high), UV light and increased salinity. However, silicon can only trigger metabolic activity when in soluble form, and once converted to opals, it becomes permanently inactive.

Silicon-based fertilisers are known, but are limited by the plant's ability to take up and transport silicon. This is because silicon can only move through the plant with water via xylem (it's not phloem mobile) and because plants vary dramatically in their ability to express influx and efflux proteins which are required to load and unload silicon from xylem. As a consequence, silicon is poorly distributed through the plant and tends to be converted into opals in the immediate areas where it is applied. This leads to uneven plant growth and strength and reduced quantities of metabolically active silicon. It also means that such fertilisers need to be applied more frequently and at higher application rates in order to obtain a growth response, thereby increasing costs. US 2020/079702 A1 describes the silicon uptake enhancement by plants using humic acid.

In light of the above it is an object of embodiments of the present to provide a composition which increases the uptake of silicon by plants, particularly by weak accumulators.

It is another object of embodiments of the present invention to provide a composition which improves the transport and distribution of silicon within plants.

It is also an object of embodiments of the present invention to provide a composition which allows silicon to remain metabolically active for longer.

It is a further object of embodiment the present invention to provide a composition which improves a plant's strength and resistance to biotic and abiotic stressors.

It is still a further object of embodiments of the present invention to provide a composition which improves silicon uptake and distribution in plants at reduced cost.

### Summary of the Invention

According to a first aspect of the invention there is provided an agricultural composition which comprises (i) a water-soluble source of silicon and (ii) a silicon transport stimulant comprising an aryl substituted urea.

By administering the agricultural composition to plants significant improvements in silicon uptake and distribution can be obtained. The agricultural composition also enables silicon in treated plants to remain metabolically active for longer, stimulating growth and the production of protective metabolites. This in turn has led to observable improvements in plant growth, plant growth rate, plant strength, plant resistance to biotic and abiotic stressors and post-harvest storage. Moreover, due the improved uptake and distribution, the agricultural composition can be applied less frequently and at reduced application rates compared to conventional silicon-based fertilisers.

Advantageously, the application of the agricultural composition to plants enables improvements in plant growth to be obtained relative to treatments where a soluble source of silicon and a silicon transport stimulant comprising an aryl substituted urea are applied separately and in subsequent application steps. This has been attributed to the synergistic effect that is obtained when the soluble source of silicon and the silicon transport stimulant are applied concurrently in the same composition. In this respect, neither the silicon nor the silicon transport stimulant behaved the same alone as in combination.

The water-soluble source of silicon may comprise a water-soluble salt of silicon and/or silicic acid. In particular, the water-soluble salt of silicon may comprise potassium silicate and/or sodium silicate.

The water-soluble source of silicon may be present in the composition in an amount from 2 to 95% w/w of the composition. In some embodiments the water-soluble source of silicon may be present in the composition in an amount from 25 to 95 w/w%. In other embodiments it may be present in an amount from 50 to 95 w/w% or from 70 to 90 w/w%. Suitably, it may be present in an amount from 75 to 85% w/w%, e.g., around 80 w/w%.

The silicon transport stimulant according to the present invention comprises diphenyl urea (DPU), N-(2-Chloro-4-pyridyl)-N'-phenylurea (CPPU), 2-nitro DPU (NDPU), mono-or di- methyl DPU, mono-or di- ethyl DPU or a combination thereof. Treating plants with a composition which contains one or more of the above silicon transport stimulants enables significant improvements in plant growth, speed of growth and resistance to biotic and abiotic stressors to be obtained.

The silicon transport stimulant may be present within the composition at a concentration of at least 10 ppm. In some embodiments the silicon transport stimulant may be present at a concentration of 10 to 2000 ppm, 10 to 1500 ppm, 10 to 1000 ppm, 10 to 750 ppm, 10 to 500 ppm or 10 to 250 ppm. Suitably, the silicon transport stimulant may be present at concentration of 20 to 200 ppm, 50 to 200 ppm or 100 to 200 ppm. Improved silicon uptake and transport can be obtained even at low silicon transport stimulant concentrations meaning improvements in plant growth and resistance can be obtained at relatively low cost.

If the composition comprises two or more silicon transport stimulants, e.g., DPU and CPPU, then the amount of each silicon transport stimulant may be substantially the same. For example, the silicon transport stimulants may be provided in a 1:1 ratio, meaning a composition containing 100 ppm of silicon transport stimulants would comprise 50 ppm of a first silicon transport stimulant such as DPU and 50 ppm of a second silicon transport stimulant such as CPPU. The silicon transport stimulants may be provided in a ratio between 1:10 and 10:1. In some embodiments the silicon transport stimulants may be provided in a ratio between 1:8 and 8:1. In other embodiments, the silicon transport stimulants may be provided in a ratio between 1:6 and 6:1. Suitably, the silicon transport stimulants may be provided in a ratio between 1:4 and 4:1. In particular, the silicon transport stimulants may be provided in a ratio between 1:2 and 2:1.

The composition may comprise one or more of the following agriculturally acceptable components: water, additional nutrient material, weak acids, metabolic stimulating agents, colouring agents, carriers or excipients, emulsifiers, thickeners, suspension agents, dispersion agents and wetting agents.

When additional nutrient materials are present in the composition, they are may be in the form of a water-soluble salt. The water-soluble salt of a nutrient mineral may be a water-soluble salt of another secondary nutrient, such as calcium, magnesium, sodium, chloride and sulphur, or a micronutrient, in particular, copper, cobalt, iron, manganese, boron, molybdenum, zinc, and nickel. Specific examples of water-soluble nutrient salts include nitrates, sulphates and chlorides. In particular, zinc nitrate, iron sulphate, zinc sulphate, magnesium sulphate, manganese sulphate, iron nitrate or manganese nitrate.

Suitable emulsifiers for use in the composition may include any known agriculturally acceptable emulsifiers. In particular, the emulsifier may comprise a surfactant such as: alkylaryl sulphonates, ethoxylated alcohols, polyalkoxylated butyl ethers, calcium alkyl benzene sulphonates, polyalkylene glycol ethers and butyl polyalkylene oxide block copolymers as are known in the art. Nonyl phenol emulsifiers such as Triton N57^{™} are particular examples of emulsifiers, which may be used in the composition, as are polyoxyethylene sorbitan esters such as polyoxyethylene sorbitan monolaurate (sold by ICI under the trade name "Tween^{™}") . In some embodiments, natural organic emulsifiers may be used in the composition, particularly for organic farming applications. Coconut oils such as coconut diethanolamide is an example of such a compound. Palm oil products such as lauryl stearate may also be used.

Thickeners which may be present in the composition include gums, for example xanthan gum, or lignosulphonate complexes, as are known in the art.

Suitable suspension agents which may be included in the composition include hydrophilic colloids (such as polysaccharides, polyvinylpyrrolidone or sodium carboxymethylcellulose) and swelling clays (such as bentonite or attapulgite).

Suitable wetting agents for use in the agricultural composition include cationic, anionic, amphoteric or non-ionic surfactants.

The composition may comprise a weak acid. A "weak acid" refers to a weak organic acid such as acetic acid, citric acid, humic acid, fulvic acid or propanoic acid. The presence of these acids improves the uptake of nutrients, and particularly nitrogen and secondary or micronutrients, by plants.

The composition may additionally comprise urea, i.e., in addition to the aryl substituted urea. The composition may comprise 5 to 15 w/w% urea. Suitably, the composition may comprise 8 to 12 w/w% urea. Advantageously, the addition of urea improves the mixability and stability of the composition.

The agricultural composition is suitable for use on most crops, but in particular can be used for the treatment of greenhouse crops, vegetables, herbs, crops and floriculture crops. The composition is particularly suitable for treating crops that are known to be intermediate and weak accumulators which typically contain 1-3% Si and 0.1-0.5% Si respectively.

The agricultural composition may exhibit insecticidal and/or acaricidal activity. For example, the agricultural composition may be effective against thrips, whitefly, aphids, spider mites, mealybugs, scale insects, psylla and mites. However, the agricultural composition does not exhibit any herbicidal activity which would either kill or inhibit the growth of plants. In contrast, the agricultural composition has the opposite effect and promotes plant growth.

According to a second aspect of the invention there is provided a formulation for administration to plants or to an environment of plants, the formulation comprising the composition according to the first aspect of the invention and a medium in which the composition is dispersed or dissolved.

The medium may comprise water or a water-miscible liquid. The water miscible liquid may comprise n-propanol, methanol, ethanol orisopropyl alcohol.

The composition according to the first aspect of the invention and the formulation may be used either alone or in conjunction with other agrochemicals such as fertilisers, fungicides, insecticides or acaricides. Preferably the composition and formulation are not used in conjunction with herbicides since this will prevent the growth promoting properties of the composition and formulation from being realised.

According to a third aspect of the invention there is provided a method for supplying silicon to plants, the method comprising the step of applying the composition according to the first aspect of the invention or the formulation according to the second aspect of the invention to the plants or to an environment thereof. The method according to the third aspect of the invention may, as appropriate, include any or all features described in relation to the first and second aspects of the invention.

By applying the composition according to the first aspect of the invention to plants, the water-soluble source of silicon and the silicon transport stimulant are supplied together in a single step. This has enabled improvements in plant growth to be obtained as well as reducing the frequency and cost of applying agricultural compositions to plants.

Since application of the composition enables improvements in silicon uptake and distribution within plants to be obtained, it can be applied less frequently and at reduced application rates. For example, the composition may be applied at intervals of at least four weeks, e.g., every 4-6 weeks, whereas known products with similar silicon contents need to applied every 1-2 weeks. The composition may be applied at an application rate of 0.5- 4 L/Ha. In some embodiments the application rate may be 0.5-2.5 L/Ha. Suitably, the application rate may be 0.5-1.5 L/Ha, e.g., around 1L/Ha which is much lower than the application rates (5L/Ha) for known products with similar silicon contents. The agricultural composition may be applied to plants, in particular crop plants, in any conventional manner, e.g. by soil or foliar application. They may be applied to root systems, stems, seeds, grains, tubers, flowers, fruit, etc. as required. Examples of means of application include spraying, e.g., by means of an electrostatic or other conventional sprayer, or drip irrigation methods or fertigation systems, which involve application directly to the soil, so as to allow calcium uptake through the roots.

According to a fourth aspect of the invention there is provided a method for enhancing the uptake of silicon by plants, the method comprising the step of applying the composition according to the first aspect of the invention or the formulation according to the second aspect of the invention to the plants or to an environment thereof. The method according to the fourth aspect of the invention may, as appropriate, include any or all features described in relation to the first and second aspects of the invention.

According to a fifth aspect of the invention there is provided a method for reducing physical damage by pests, the method comprising the step of applying the composition according to the first aspect of the invention or the formulation according to the second aspect of the invention to the plants or to an environment thereof. The method according to the fifth aspect of the invention may, as appropriate, include any or all features described in relation to the first and second aspects of the invention.

According to a sixth aspect of the invention there is provided a method for improving shelf life of a harvested crop by enhancing silicon distribution to the harvested parts of a plant, the method comprising the step of applying the composition according to the first aspect of the invention or the formulation according to the second aspect of the invention to the plants or to an environment thereof. The method according to the sixth aspect of the invention may, as appropriate, include any or all features described in relation to the first and second aspects of the invention.

According to a seventh aspect of the invention there is provided a method for preventing or alleviating disease or infection in plants by improving distribution and efficacy of applied silicon, the method comprising the step of applying the composition according to the first aspect of the invention or the formulation according to the second aspect of the invention to the plants or to an environment thereof. The method according to the seventh aspect of the invention may, as appropriate, include any or all features described in relation to the first and second aspects of the invention.

According to an eighth aspect of the invention there is provided a method for improving plant growth during conditions of abiotic stress, the method comprising the step of applying the composition according to the first aspect of the invention or the formulation according to the second aspect of the invention to the plants or to an environment thereof. The method according to the eighth aspect of the invention may, as appropriate, include any or all features described in relation to the first and second aspects of the invention.

According to a ninth aspect of the invention there is provided a method for improving plant growth rate, the method comprising applying the composition according to first aspect of the invention or the formulation according to the second aspect of the invention to the plant or to an environment thereof. The method according to the ninth aspect of the invention may, as appropriate, include any or all features described in relation to the first and second aspects of the invention.

According to a tenth aspect of the invention there is provided a method for reducing the volume of silicon needed for a plant growth response, the method comprising applying the composition according to the first aspect of the invention or the formulation according to the second aspect of the invention to the plant or to an environment thereof. The method according to the tenth aspect of the invention may, as appropriate, include any or all features described in relation to the first and second aspects of the invention.

The methods according to the third to tenth aspects of the invention may comprise the step of applying the composition according to the first aspect of the invention or the formulation according to the second aspect of the invention to the plants or an environment thereof at intervals which are greater than two weeks.

The methods according to the third to tenth aspects of the invention may comprise the steps of applying a silicon fertiliser and the composition according to the first aspect of the invention or the formulation according to the second aspect of the invention to the plants or an environment thereof.

By applying the composition or formulation and a silicon-based fertiliser to plants, the silicon-based fertiliser can be applied less frequently and at reduced application rates which enables treatments for improving silicon uptake and distribution to become more cost-effective.

According to an eleventh aspect of the invention there is provided a method for preparing the agricultural composition, the method comprising mixing a water-soluble source of silicon and a silicon transport stimulant comprising an aryl substituted urea in a solvent. The method according to the eleventh aspect of the invention may, as appropriate, include any or all features described in relation to the first aspect of the invention.

In some embodiments the solvent comprises water.

In some embodiments the mixture comprising the water-soluble source of silicon and the silicon transport stimulant may be heated. Suitably the mixture may be heated to a temperature of at least 40°C.

In some embodiments the mixture may be stirred. Suitably the mixture may be stirred at 100 -200 rpm.

According to an eleventh aspect of the invention there is provided a use of the composition according to the first aspect of the invention or of the formulation according to the second aspect of the invention as a fertiliser for administration to crops. The use according to the eleventh aspect of the invention may, as appropriate, include any or all features described in relation to the first to tenth aspects of the invention.

According to a twelfth aspect of the invention there is provided the use of an aryl substituted urea as a silicon transport stimulant. The use according to the twelfth aspect of the invention may, as appropriate, include any or all features described in relation to the first to eleventh aspects of the invention.

### Detailed Description of the Invention

In order that the invention may be more clearly understood one or more embodiments thereof will now be described, by way of example only, with reference to the accompanying drawings, of which:

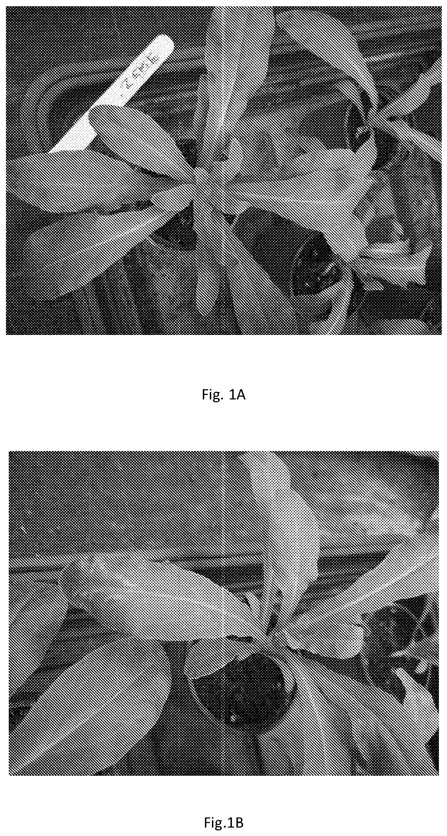

- Figure 1A: shows the results of tests (study 3) where plants treated with a formulation containing a silicon transport stimulant and a silicon source were exposed to whitefly.
- Figure 1B: shows the results of tests (study 3) where plants treated with a silicon containing formulation without a silicon transport stimulant were exposed to whitefly.

### Example 1

The following composition was prepared as described:

| Analysis: | Silicon (SiO₂) 21% w/w, 50ppm Diphenylurea | |
|---|---|---|
| **Raw Material (Mix Order)** | **Specification** | **% w/w formulae** |
| H₂O | | 08.985 |
| Colour | | 00.010 |
| Potassium silicate | 26.5% SiO2 | 80.000 |
| N,N Diphenylurea | N, N Diphenylurea | 00.005 |
| Urea | 46% N | 11.000 |

The composition was prepared by adding water to a vessel, ensuring that the temperature of the water is at least 40°C. This is then stirred with a mixer to achieve a reasonable vortex (approx 100 - 200rpm), upon which the colour is added and the N,N diphenyl urea is added and mixed. Thereafter, Potassium Silicate is added to the vessel, and again, mixing was continued until it had dissolved. Thereafter to the vessel Urea is added and mixed until dissolved. The solution mixed for 30 minutes before packaging.

### Example 2

Using a similar procedure to that described in Example 1, the following composition was prepared:

| Analysis: | Si 21% w/w, 50ppm CPPU | |
|---|---|---|
| **Raw Material (Mix Order)** | **Specification** | **% w/w formulae** |
| H₂O | | 08.985 |
| Colour | | 00.010 |
| Potassium Silcate | 26.5% SiO2 | 80.000 |
| CPPU | N-(2-Chloro-4-pyridal)-N'-phenylurea | 00.005 |
| Urea | 46% N | 11.000 |

The composition was prepared by adding water to a vessel, ensuring that the temperature of the water is at least 40°C. This is then stirred with a mixer to achieve a reasonable vortex (approx 100 - 200rpm), upon which the colour is added and the N-(2-Chloro-4-pyridal)-N'-phenylurea is added and mixed. Thereafter, Potassium Silicate is added to the vessel, and again, mixing was continued until it had dissolved. Thereafter to the vessel Urea is added and mixed until dissolved. The solution mixed for 30 minutes before packaging.

### Example 3

Using a similar procedure to that described in Example 1, the following composition was prepared:

| Analysis: | Silicon (Si02) 21% w/w, 100 ppm Diphenylurea | |
|---|---|---|
| **Raw Material (Mix Order)** | **Specification** | **% w/w formulae** |
| H₂O | | 08.980 |
| Colour | | 00.010 |
| Potassium silicate | 26.5% SiO2 | 80.000 |
| N,N Diphenylurea | N, N Diphenylurea | 00.010 |
| Urea | 46% N | 11.000 |

### Example 4

Using a similar procedure to that described in Example 2, the following composition was prepared:

| Analysis: | Silicon (Si02) 21% w/w, 100 ppm CPPU | |
|---|---|---|
| **Raw Material (Mix Order)** | **Specification** | **% w/w formulae** |
| H₂O | | 08.980 |
| Colour | | 00.010 |
| Potassium Silcate | 26.5% SiO2 | 80.000 |
| CPPU | N-(2-Chloro-4-pyridal)-N'-phenylurea | 00.010 |
| Urea | 46% N | 11.000 |

### Example 5

Using a similar procedure to that described in Example 1, the following composition was prepared:

| Analysis: | Silicon (Si02) 21% w/w, 200 ppm Diphenylurea | |
|---|---|---|
| **Raw Material (Mix Order)** | **Specification** | **% w/w formulae** |
| H₂O | | 08.970 |
| Colour | | 00.010 |
| Potassium silicate | 26.5% SiO2 | 80.000 |
| N,N Diphenylurea | N, N Diphenylurea | 00.020 |
| Urea | 46% N | 11.000 |

### Example 6

Using a similar procedure to that described in Example 2, the following composition was prepared:

| Analysis: | Silicon (Si02) 21% w/w, 200 ppm CPPU | |
|---|---|---|
| **Raw Material (Mix Order)** | **Specification** | **% w/w formulae** |
| H₂O | | 08.970 |
| Colour | | 00.010 |
| Potassium Silcate | 26.5% SiO2 | 80.000 |
| CPPU | N-(2-Chloro-4-pyridal)-N'-phenylurea | 00.020 |
| Urea | 46% N | 11.000 |

### Study 1: Growth and speed of development under normal and salt stress growing conditions study - pak choi

### Method

Experiments were conducted to evaluate what (if any) difference the application of a formulation based on the present invention made to the growth and speed of development of plants when compared with a formulation blank using standard silicon at the same levels.

Two formulations were used: Formulation 1 (inventive), and the same formulation without a silicon transport stimulant (N,N Diphenylurea) incorporated (formulation blank), and a water only treatment (control). The formulations are shown below:

### Formulation 1 (Inventive)

| **Material** | **% w/w** |
|---|---|
| Water | 19.995% |
| Potassium silicate | 80.000% |
| N, N Diphenylurea | 00.005% |

### Formulation 2 (Formulation blank)

| **Material** | **% w/w** |
|---|---|
| Water | 20.00% |
| Potassium silicate | 80.00% |

This study used an experimental design of 6 treatments: 1) Control, 2) Formulation 1 (inventive), 3) Formulation 2 (formulation blank), 4) salt stressed, 5) formulation 1 (inventive) and salt stressed, 6) formulation 2 (formulation blank) and salt stressed. All treatments had 10 replicates.

Seeds of Pak Choi (*Brassica Chinensis*) were germinated in seed trays and transplanted out after 7 days into 1 litre pots containing 700 grams of Levington M3 growing medium. Plants were grown under lighted and heated greenhouse conditions, for a further three weeks before treatment commenced.

Formulation 1 and formulation 2 treatments were applied at a dose of 0.5ml per plant daily.

Plants were watered daily, with 50 ml of water in the first two weeks and 100ml in later growth stages. Control watered plants were watered with fresh water. Salt Stressed plants were watered with 100 mmol salt solution, 5.84 grams ltr-1.

Plants were treated for 1 week, at 1 week the oldest, alive, leaf was harvested and sent to NRM requesting composite values of Ca and Na within the plant tissues.

Plants were treated for a further 2 weeks and then fully harvested (6 weeks after initial seeds were planted), and fresh leaf weight recorded. The tissues were dried out for a further week and dry weight recorded.

Measurements were taken at harvest after four weeks and results are summarised below:

### Results

| | **Fresh Weight** | **% Head size** | **% Na in leaf** |
|---|---|---|---|
| Control | 67.724^{a} | 46.2^{a} | 0.36 |
| Silicon | 72.726^{a} | 47.1^{a} | 2.95 |
| Silicon + STS | 96.812^{b} | 48.5^{b} | 0.64 |
| Salt control | | 43.7^{c} | 0.51 |
| Salt + Silicon | 47.219^{c} 50.793^{c} | 45.0^{c} | 1.70 |
| Salt + Silicon + | 61.959^{a} STS | 45.0^{c} | 1.37 |

### Conclusion

Formulation 2 (a standard potassium silicate) did not significantly increase crop growth (fresh weight) either under normal or saline water regimes, however formulation 1 (inventive) significantly improved growth in crops grown under normal water and also under salinity stress. Salinity significantly reduced growth of untreated plants compared to control, formulation 2 did not significantly improve growth under salinity, however formulation 1 allowed normal growth (not significantly different to control) under saline growing conditions. The experiment demonstrates that the presence of a silicon transport stimulant such as N, N Diphenylurea improves the performance of potassium silicates both for improving plant growth and reducing damage to crop growth from saline water.

Under normal water both formulation 1 and formulation 2 increased growth rate (% head size attained) over the tested period (6 weeks). However formulation 1 gave significantly faster growth as well as a larger plant.

It was demonstrated that addition of a silicon transport stimulant (50ppm DPU) to a standard potassium silicate stimulated significant growth in pak choi plants, and prevented a decrease in growth under saline growing conditions that the standard silicon did not achieve.

When saline water is introduced pak choi sodium content was significantly increased. Application of a conventional silicon fertilizer (formulation 2) increased sodium uptake in both control and salt conditions. When a silcon transport stimulant was added (treatment 1) significantly less sodium was taken up by plants under both control and saline water than in the formulation blank.

This coincided with better growth and speed of growth over untreated and standard silicon treated plants.

### Study 2: Growth and speed of development study - onions

### Method

An experiment was set up to evaluate what (if any) difference the application of a formulation containing potassium silicate and a silicon transport stimulant made to the growth and speed of development of onions (Allium fistulosum var Ishikura) when compared with a formulation blank using standard silicon at the same levels, and the silicon transport stimulant alone.

Three formulations were used: Formulation 1(inventive), and the same formulation without a silicon transport stimulant (N,N Diphenylurea) incorporated (formulation blank), a silicon transport stimulant (STS) only treatment and a water only treatment (control). The formulations are shown below:

### Formulation 1 (Inventive)

| Material | %w/w |
|---|---|
| Water | 19.995% |
| Potassium silicate | 80.000% |
| N, N Diphenylurea | 00.005% |

### Formulation 2 (silicon only)

| Material | %w/w |
|---|---|
| Water | 20.00% |
| Potassium silicate | 80.00% |

### Formulation 3 (STS only)

| Material | %w/w |
|---|---|
| N, N Diphenylurea | 00.005% |
| Water | 99.995% |

This study used an experimental design of 4 treatments: 1) Control, 2) Formulation 1 (inventive), 3) Formulation 2 (silicon only), 4) Formulation 3 (STS only). All treatments had 4 replicates.

Seeds of spring onion (*Allium fistulosum var ishikura*) were germinated in seed trays and transplanted out after 7 days into 5 litre pots containing of Levington M3 growing medium. Plants were grown under lighted and heated greenhouse conditions, for a further three weeks before treatment commenced.

Formulation 1, formulation 2, and formulation 3 treatments were foliar applied as a 1% spray solution to 1 weeks, 2 weeks and 3 weeks and 4 weeks after transplanting.

Plants were watered daily with an equal amount of water per pot as needed. Plants were grown as bunches (same as commercial practice) for 11 weeks then fully harvested and measured for height, diameter, bulb weight and total fresh weight per pot. Speed of growth (stem extension of largest leaf) was monitored throughout the growing period.

### Results

| | **Control** | **STS only** | **Silicon only** | **Inventive** |
|---|---|---|---|---|
| Mean Stem diameter (mm) | 3.38^{a} | 3.00^{a} | 3.89^{ab} | 4.73^{b} |
| Mean Bulb diameter (mm) | 9.65^{a} | 10.52^{a} | 12.64^{ab} | 9.30^{b} |
| Total bunch fresh weight (g) | 21.10^{a} | 21.40^{a} | 23.35^{a} | 37.23^{b} |
| Mean 9-day diameter increase (mm) | 1.102^{a} | 0.750^{a} | 0.995^{a} | 1.945^{b} |

### Conclusion

Neither silicon or the STS treatments significantly increased stem dimeter, bulb diameter or total fresh weight, whilst the inventive formula increased all tested growth parameters.

The speed of growth tested over a nine day period following application was measured, with no significant increase in growth rate measured with either silicon or STS alone but a significant increase in growth rate using the inventive formula.

These results demonstrate a clear synergy with growth being acheived with a combination of silicon and an STS that is not possible using a standard silicon source.

### Study 3: Growth and development and photosynthesis study - calendula

### Method

An experiment was set up to evaluate what (if any) difference the application of a formulation based on the present invention made to the growth and speed of development, flowering and photosynthesis of Pot Marigold (*Calendula officinalis var calypso*) when compared with a formulation blank using standard silicon at the same levels, and the silicon transport stimulant alone.

Three formulations were used: Formulation 1(inventive), and the same formulation without a silicon transport stimulant (N,N Diphenylurea) incorporated (formulation blank), a silicon transport stimulant (STS) only treatment and a water only treatment (control). The formulations are shown below:

**Formulation 1 (Inventive)**

| Material | %w/w |
|---|---|
| Water | 19.995% |
| Potassium silicate | 80.000% |
| N, N Diphenylurea | 00.005% |

### Formulation 2 (silicon only)

| Material | %w/w |
|---|---|
| Water | 20.00% |
| Potassium silicate | 80.00% |

### Formulation 3 (STS only)

| Material | %w/w |
|---|---|
| N, N Diphenylurea | 00.005% |
| Water | 99.995% |

This study used an experimental design of 4 treatments: 1) Control, 2) Formulation 1 (inventive), 3) Formulation 2 (silicon only), 4) Formulation 3 (STS only). All treatments had 7 replicates.

Seeds of Pot Marigold (*Calendula officinalis var calypso*) were germinated in seed trays and transplanted out after 7 days into 2 litre pots containing peat substitute compost. Plants were grown under lighted and heated greenhouse conditions.

Formulation 1, formulation 2, and formulation 3 treatments were foliar applied as a 1% spray solution to at the three leaf stage, and again after 6 weeks.

Plants were watered daily as needed and were grown for twelve weeks following first treatment before being harvested and measured. Measurements were taken of chlorophyll fluorescence, a key stress indicator, 1 and 6 weeks after first treatment to assess the length of any effect on photosynthesis. Measurements of height, flower and bud number were measured periodically, and final cumulative flower and bud production was recorded. During the study whitefly were present in the glasshouse, and damage to the plant leaves was assessed at harvest.

### Results

SPAD Index (chlorophyll fluorescence) newest mature leaf.

| | **Control** | **STS only** | **Silicon only** | **Inventive** |
|---|---|---|---|---|
| 1 week after treatment | 7.88^{a} | 6.59^{b} | 7.45^{a} | 7.95^{a} |
| 6 weeks after treatment | 5.79^{a} | 6.26^{a} | 6.81^{ab} | 8.15 |

Standard silicon treatment did not signifcanty effect chlorophyll fluorescence, a key indicator of photosynthesis. The inventive formula significantly increased photosynthesis for a 6 week period following appication. The number of flower buds present on the plants was measured 6 weeks after each application. The inventive formula had significantly higher flower bud numbers at both 6 and 12 weeks, whereas neither the silicon nor the STS treatments were different from the control.

### Mean number of flower buds per plant

| | **Control** | **STS only** | **Silicon only** | **Inventive** |
|---|---|---|---|---|
| 6 weeks after 1^{st} treatment | 4.714^{a} | 3.286^{b} | 4.286^{a} | 5.571^{c} |
| 6 weeks after 2^{nd} treatment | 4.125^{ab} | 3.714^{a} | 5.286^{b} | 8.286^{c} |

### Plant height, flower production and whitefly damage at end of experiment.

| | **Control** | **STS only** | **Silicon only** | **Invent ive** |
|---|---|---|---|---|
| Plant height (cm) | 20.642^{ab} | 18.886^{a} | 22.971^{bc} | 24.814^{c} |
| Cumulative flower production. | 4.125^{ab} | 3.714^{a} | 5.286^{b} | 8.286^{c} |
| Whitefly damage | present | present | present | absent |

After 12 weeks (six weeks after second application) the experiment ended. Final plant height was measured with the inventive formula being the only treatment significantly different to the untreated control, with taller plants. Total flowers produced during the 12 week period studied were recorded, again the inventive formula treatment produced significantly more flowers than than all other treatments.

During the study whitefly were present in the glasshouse, with the control, STS and silicon only treatments characteristic damage to leaves from feeding occurred, whereas plants treated with the inventive formula had no damage (see photograph).

As best shown in Figure 1A, the plants treated with Formulation 1 showed no whitefly damage, whereas plants that were treated with silicon only exhibited the characteristic yellow mottling which is indicative of whitefly damage.

### Conclusions

This experiment demonstrates that the use of STS combined with silicon produces improvements in flower production, plant height, photsynthesis and reduced insect damage (whitefly). Neither silicon alone nor the STS treatments had any significant effect alone.

The experiment gives clear evidence of improved metabolic activity and transport of the silicon by use of a combination of an STS and silicon. This is evidenced by effects 6 weeks after application in new plant parts that were not present at the time of aplication.

The inventive formulation showed protection from pest damage in leaves that had grown after application, which would not be expected with conventional silicon applications and was not observed in the silicon olny or STS only treatments. This is clear evidence of continued mobility, and better transport.

Metabolic activity (photosynthesis) was increased 6 weeks after application in leaves that had grown after application. Silicon is not capable of being translocated 6 weeks after application as it quickly gets made immobile as polymers in the leaf rendering it metabolically inactive and immobile. The inventive formula was able to produce higher photosythesis in new leaves 6 weeks after application, whereas the other formulations had no effect.

These results demonstrate a clear synergy with growth being acheived with a combination of silicon and an STS that is not possible using a standard silicon source.

The inventive formulation produced more flowers, more buds, taller plants, higher photosynthesis and improved insect resistance when compared to conventional silicon application.

### Study 4: Growth and speed of development study - Hydroponically grown basil

### Method

An experiment was set up to evaluate what (if any) difference the application of a formulation based on the present invention made to the growth and speed of development of basil (Ocimum x africanum) when compared with a formulation blank using standard silicon at the same levels.

Two formulations were used: Formulation 1(Inventive), and the same formulation without a silicon transport stimulant (N-(2-Chloro-4-pyridal)-N'-phenylurea) incorporated (formulation blank). The formulations are shown below:

### Formulation 1 (Inventive)

| **Material** | **% w/w** |
|---|---|
| Water | 19.995% |
| Potassium silicate | 80.000% |
| N-(2-Chloro-4-pyridal)-N'-phenylurea | 00.005% |
| Urea (46% N) | 11.000 |

### Formulation 2 (silicon only)

| **Material** | **% w/w** |
|---|---|
| Water | 20.00% |
| Potassium silicate | 80.00% |
| Urea (46% N) | 11.000 |

This study used an experimental design of 3 treatments: 1) Silicon only(Formulation 2), 2) Inventive (Formulation 1), 3) half inventive (Formulation 1 at half rate). All treatments had 10 replicates.

Seeds of lemon basil *(Ocimum x africanum)* were germinated in vermiculite pots and grown suspended in water in a hydroponic growing system lit by LED lighting. Each treatment was added to the water at 0.1mm per plant per week for three weeks. Plants were grown for 4 weeks and then harvested and measured.

At harvest total fresh weight of shoots, plant height, and branching were measured to assess the effect of treatments on growth and architecture of the plants.

### Results

| | **T1 Silicon only** | **T2 Inventive** | **T3 Inventive half level** |
|---|---|---|---|
| Plant height (cm) | 23.11^{a} | 31.05^{b} | 33.05^{b} |
| Mean fresh weight of shoots (g) | 12.63^{a} | 15.94^{b} | 14.11^{c} |
| Mean number internodes main shoot | 4.4^{a} | 5.4^{b} | 4.6^{a} |
| Mean number internodes lateral shoots | 1.5^{a} | 11.0^{b} | 11.0^{b} |

### Conclusion

Plants treated with the silicon only formulation blank (T1) had significantly lower height, shoot weight, primary internodes and lateral branches than the inventive formula at the same rate. At half the level applied (T3) the inventive formula significantly increased height, fresh weight and lateral branching when compared to the silicon only treatment.

The presence of an STS in the formulation allows silicon to be more effective at stimulating plant growth even when applied at half the level allowing lower appliction rates of silicon to be effective.

Thye use of STS in silicon formulations significantly increases plant height, branching and total shoot biomass in plants.

Basil is a low silicon accumulator, and accumulates silicon at a lower rate than is available in water. This experiment demonstrates that use of STS stimulates better uptake of silicon in plants, leading to increased plant growth.

In low silicon accumulation plants (all dicots) the amout of silicon avaialable is not a limiting factor growth, rather it is the inability of the plant to take it up in roots and transport it to shoots via xyllem. By adding a silicon transport stimulant (STS) signifiant growth improvements can be obtained even when supplying half the level of silicon. This clearly demostrates that use of an STS in silicon improves the plants ability to take up silicon and use it for growth.

### Study 5: Growth and speed of development study - parsley

### Method

An experiment was set up to evaluate what (if any) difference the application of a formulation based on the present invention made to the growth and speed of development of parsley (*Petroselenum crispum var VPA30*) when compared with a formulation blank using standard silicon at the same levels, and the silicon transport stimulant alone.

Three formulations were used: Formulation 1(inventive), and the same formulation without a silicon transport stimulant (N,N Diphenylurea) incorporated (formulation blank), a silicon transport stimulant(STS)only treatment and a water only treatment (control). The formulations are shown below:

### Formulation 1 (Inventive)

| Material | %w/w |
|---|---|
| Water | 19.995% |
| Potassium silicate | 80.000% |
| N, N Diphenylurea | 00.005% |

### Formulation 2 (silicon only)

| Material | %w/w |
|---|---|
| Water | 20.00% |
| Potassium silicate | 80.00% |

### Formulation 3 (STS only)

| Material | %w/w |
|---|---|
| N, N Diphenylurea | 00.005% |
| Water | 99.995% |

This study used an experimental design of 4 treatments: 1) Control, 2) Formulation 1 (inventive), 3) Formulation 2 (silicon only), 4) Formulation 3 (STS only). All treatments had 11 replicates.

Seeds of parsley (*Petroselinum crispum var VPA30*) were germinated in seed trays and transplanted out (when the first true leaf formed) into 2 litre pots containing of peat free compost. Plants were grown under lighted and heated greenhouse conditions, for a further four weeks before treatment commenced.

Formulation 1, formulation 2, and formulation 3 treatments were soil applied at an equivalent rate to 1 L/Ha at week 0 and grown for 14 days.

Plants were watered daily with an equal amount of water per pot as needed. Shoot number, diameter and growth rate were assessed and at harvest samples were retained and kept in refrigerated storage for 14 days then assessed for quality (visual score 1=rotted, 2=yellowed, 3=light green, 4=medium green, 5=dark green) to assess impact on post-harvest shelf life.

### Results

### Shoot number 3, 7 and 14 days after treatment.

| | **Control** | **STS only** | **Silicon only** | **Inventive** |
|---|---|---|---|---|
| Mean Shoot number 3 days after treatment | 7.73^{a} | 8.09^{a} | 8.18^{a} | 8.82^{b} |
| Mean shoot number 7 days after treatment | 8.00^{a} | 8.45^{a} | 9.27^{b} | 10.09^{c} |
| Mean shoot number 14 days after treatment | 8.27^{a} | 8.18^{a} | 10.36^{b} | 11.18^{c} |

The inventive formulation was the only treatment to significantly increase shoot number over control 3 days after treatment (faster acting). The inventive treatment significantly increased shoot number over the standard silicon treatment at 3, 7 and 14 days.

### Growth rate (48h increase in shoot number and length) 3 days after treatment.

| | **Control** | **STS only** | **Silicon only** | **Inventive** |
|---|---|---|---|---|
| 48h shoot number increase 3 DAT. | 0.091^{ab} | 0.000^{a} | 0.182^{b} | 0.636^{c} |
| 48hemerging shoot growth rate cm/48h 3 DAT | 1.091^{a} | 0.473^{b} | 1.091^{a} | 1.809^{c} |

3 days after treatment the silicon only treatment did not significantly affect the rate of new shoot production (48h shoot number increase), whilst the STS alone treatment significantly reduced the rate of new shoot production. The inventive formula (silicon combined with STS) gave a large and significant increase in the rate of new shoot production.

3 days after treatment the speed of shoot extension of the youngest emerging shoot was not significantly increased with the silicon only treatment and was significantly reduced when treating using STS alone. The inventive formula (silicon plus STS) showed a large and significant increase in speed of shoot growth.

### Growth rate (4 day increase in shoot number and length) 7 days after treatment.

| | | **Control STS only** | **Silicon only** | **Inventive** |
|---|---|---|---|---|
| 4-day shoot number increase 7-DAT. | 0.364^{a} | 0.364^{a} | 1.091^{b} | 1.273^{c} |
| 4-day emerging shoot growth rate 7-DAT. | 1.8591^{ab} | 1.368^{a} | 1.368^{b} | 5.850^{c} |

7 days after treatment the silicon only treatment had significantly increased the rate of shoot production relative to the control (4 day shoot number increase), but the inventive formula (silicon plus STS) gave a large and significant increase over both the control and silicon only treatment in terms of shoot production. The STS only treatment had no significant effect over the control on shoot production.

7 days after treatment neither the silicon only treatment nor the STS only treatment had any significant effect on the speed of shoot extension (4 day increase in emerging shoot length over that of the untreated control. The inventive formula gave a significant increase in the speed of shoot extension relative to the control, the silicon only treatment and the STS only treatments.

Leaf colour was used as a shelf life indicator(visual score 1=rotted, 2=yellowed, 3=light green, 4=medium green, 5=dark green). 4 is the threshold at which the parsley would saleable, <4 it would be discarded as not fit for use.

| **Colour score** | **Control** | **STS only** | **Silicon only** | **Inventive** |
|---|---|---|---|---|
| 1 day post-harvest. | 5.0^{a} | 5.0^{a} | 5.0^{a} | 5.0^{a} |
| 7 days post-harvest | 4.3^{a} | 4.3^{a} | 5.0^{b} | 5.0^{b} |
| 14 days post-harvest | 3.2^{a} | 3.0^{a} | 4.1^{b} | 5.0^{c} |
| 20 days post harvest | 2.6^{a} | 2.5^{a} | 3.5^{b} | 4.4^{c} |

7 days post harvest, parsely that had been treated with silicon only and the inventive formula were significantly greener than the parsely which was subjected to the control and STS only treatments. By 14 days after treatment the parsely which has been treated with the inventive was significantly greener than the parsely that has been treated with the silicon only formula, and the only one to achieve the top score. At 20 days post harvest, parsely which had been treated with the control, silicon only and STS only formualas were all below the saleable threshhold of 4, but the inventive formula was significantly better and above the threshhold.

### Conclusion

Parsley is a dicotyledon, and is known to be a poor transporter of silicon. This experiment applied silicon to the soil at a low rate and the experiment clearly shows significantly faster response both in terms of new shoot production and speed of shoot growth. After 3 days the inventive formula was significantly improving growth whereas silicon alone had no significant effect. This is a clear indication that the plant was better able to take up silicon when the STS was incorporated.

It took 7 days for silicon alone to have any significant impact on growth, but at all stages the inventive formula gave stronger growth in terms of shoot number, growth rate and height. This is indicative of continued improved uptake, transport and distribution over the course of the experiment.

The inventive formula allows small levels of silicon to be biologically active via better uptake, transport and distribution through the plant. It demonstrates that lack of mobility rather than dose rate of silicon is the limiting factor in growth rate, not the amount of silicon added to the soil.

The post harvest storage measurements show that the inventive step allows silicon to be used to prolong shelf life in plants, with the inventive formula extending storage life longer than silicon alone. This is a clear indication of improved uptake and more even distribution through the plant.

## Claims

1. An agricultural composition which comprises (i) a water-soluble source of silicon and (ii) a silicon transport stimulant comprising an aryl substituted urea, wherein the silicon transport stimulant comprises diphenyl urea (DPU), N-(2-chloro-4-pyridal)-N'-phenylurea (CPPU), 2-nitro DPU (NDPU), mono-or di- methyl DPU, mono-or di- ethyl DPU or a combination thereof.

2. A composition according to claim 1, wherein the water- soluble salt of silicon comprises potassium silicate and/or sodium silicate.

3. A composition according to claim 1 or claim 2, wherein silicon transport stimulant comprises DPU and CPPU.

4. A composition according to any preceding claim, wherein the silicon transport stimulant is present within the composition at a concentration of 10 to 2000 ppm, and optionally wherein the silicon transport stimulant is present at a concentration in the range of 20 to 200 ppm.

5. A composition according to any preceding claim, which additionally comprises urea, and optionally wherein the composition comprises 5-15 w/w% urea.

6. A method for supplying silicon to plants, the method comprising the step of applying the composition according to any one of claims 1 to 5 to the plants or to the environment thereof.

7. A method for enhancing the uptake of silicon by plants, the method comprising the step of applying the composition according to any one of claims 1 to 5 to the plants or to an environment thereof.

8. A method for reducing physical damage by pests and for preventing or alleviating disease or infection in plants by improving distribution and efficacy of applied silicon, the method comprising the step of applying the composition according to any one of claims 1 to 5 to the plants or to an environment thereof.

9. A method for improving plant growth during conditions of abiotic stress, the method comprising applying the composition according to any one of claims 1 to 5 to the plant or to an environment thereof.

10. A method for improving plant growth rate and optionally for reducing the volume of silicon needed for a growth response, the method comprising applying the composition according to any one of claims 1 to 5 to the plant or to an environment thereof.

11. A method according to claim any of claims 6 to 10, wherein the composition according to any one of claims 1 to 5 is applied to the plants or to an environment thereof at intervals greater than two weeks.

12. A method according to any of claims 6 to 10, the method comprising the steps of applying a silicon fertiliser and the composition according to any one of claims 1 to 5 to the plants or to an environment thereof.

13. A method of preparing an agricultural composition, the method comprising the step of mixing a source of water-soluble silicon with a silicon transport stimulant comprising an aryl substituted urea.

14. The use of a composition according to any one of claims 1 to 5 as a fertilizer for administration to crops.

15. The use of a diphenyl urea compound as a silicon transport stimulant.

## Patentansprüche

1. Landwirtschaftliche Zusammensetzung, welche (i) eine wasserlösliche Quelle von Silizium und (ii) ein Siliziumtransportstimulans, umfassend einen Arylsubstituierten Harnstoff, umfasst, wobei das Siliziumtransportstimulans Diphenylharnstoff (DPU), N-(2-Chlor-4-pyridal)-N'-phenylharnstoff (CPPU), 2-Nitro-DPU (NDPU), Mono- oder Di-Methyl-DPU, Mono- oder Di-Ethyl-DPU oder eine Kombination davon umfasst.

2. Zusammensetzung gemäß Anspruch 1, wobei das wasserlösliche Salz des Siliziums Kaliumsilikat und/oder Natriumsilikat umfasst.

3. Zusammensetzung gemäß Anspruch 1 oder Anspruch 2, wobei das Siliziumtransportstimulans DPU und CPPU umfasst.

4. Zusammensetzung gemäß einem der vorhergehenden Ansprüche, wobei das Siliziumtransportstimulans in der Zusammensetzung in einer Konzentration von 10 bis 2000 ppm vorhanden ist, und optional wobei das Siliziumtransportstimulans in einer Konzentration im Bereich von 20 bis 200 ppm vorhanden ist.

5. Zusammensetzung gemäß einem der vorhergehenden Ansprüche, welche zusätzlich Harnstoff umfasst, und optional wobei die Zusammensetzung 5-15 Gew./Gew.-% Harnstoff umfasst.

6. Verfahren zur Zufuhr von Silizium zu Pflanzen, wobei das Verfahren den Schritt des Aufbringens der Zusammensetzung gemäß einem der Ansprüche 1 bis 5 auf die Pflanzen oder auf die Umgebung davon umfasst.

7. Verfahren zur Steigerung der Aufnahme von Silizium durch Pflanzen, wobei das Verfahren den Schritt des Aufbringens der Zusammensetzung gemäß einem der Ansprüche 1 bis 5 auf die Pflanzen oder auf eine Umgebung davon umfasst.

8. Verfahren zur Verringerung von physischem Schaden durch Schädlinge und zur Vorbeugung oder Linderung von einer Krankheit oder Infektion in Pflanzen durch Verbesserung der Verteilung und der Wirksamkeit von aufgebrachtem Silizium, wobei das Verfahren den Schritt des Aufbringens der Zusammensetzung gemäß einem der Ansprüche 1 bis 5 auf die Pflanzen oder auf eine Umgebung davon umfasst.

9. Verfahren zur Verbesserung des Pflanzenwachstums während Bedingungen abiotischen Stresses, wobei das Verfahren das Aufbringen der Zusammensetzung gemäß einem der Ansprüche 1 bis 5 auf die Pflanze oder auf eine Umgebung davon umfasst.

10. Verfahren zur Verbesserung der Pflanzenwachstumsrate und optional zur Verringerung des für eine Wachstumsantwort benötigten Siliziumvolumens, wobei das Verfahren das Aufbringen der Zusammensetzung gemäß einem der Ansprüche 1 bis 5 auf die Pflanze oder auf eine Umgebung davon umfasst.

11. Verfahren gemäß einem Anspruch der Ansprüche 6 bis 10, wobei die Zusammensetzung gemäß einem der Ansprüche 1 bis 5 in Intervallen von mehr als zwei Wochen auf die Pflanzen oder auf eine Umgebung davon aufgebracht wird.

12. Verfahren gemäß einem der Ansprüche 6 bis 10, wobei das Verfahren die Schritte des Ausbringens eines Siliziumdüngers und der Zusammensetzung gemäß einem der Ansprüche 1 bis 5 auf die Pflanzen oder auf eine Umgebung davon umfasst.

13. Verfahren zur Herstellung einer landwirtschaftlichen Zusammensetzung, wobei das Verfahren den Schritt des Mischens einer Quelle von wasserlöslichem Silizium mit einem den Siliziumtransportstimulans, umfassend einen Arylsubstituierten Harnstoff, umfasst.

14. Verwendung einer Zusammensetzung gemäß einem der Ansprüche 1 bis 5 als Düngemittel zur Verabreichung an Kulturen.

15. Verwendung einer Diphenylharnstoffverbindung als Siliziumtransportstimulans.

## Revendications

1. Une composition agricole, qui comprend (i) une source soluble dans l'eau de silicium et (ii), un stimulant de transport de silicium comprenant une urée à substitution aryle, dans laquelle le stimulant de transport de silicium comprend de la diphényl urée (DPU), de la N-(2-chloro-4-pyridal)-N'-phénylurée (CPPU) de la 2-nitro DPU (NDPU), ou de la mono-ou di-méthyl DPU, de la mono ou di-éthyl DPU ou leurs combinaisons.

2. Une composition suivant la revendication 1, dans lequel le sel soluble dans l'eau de silicium comprend du silicate de potassium et/ou du silicate de sodium.

3. Une composition suivant la revendication 1 ou la revendication 2, dans laquelle le stimulant de transport de silicium comprend de la DPU et de la CPPU.

4. Une composition suivant l'une quelconque des revendications précédentes, dans laquelle le stimulant de transport de silicium est présent dans la composition en une concentration de 10 à 2 000 ppm, et dans laquelle éventuellement le stimulant de transport de silicium est présent en une concentration dans la plage de 20 à 200 ppm.

5. Une composition suivant l'une quelconque des revendications précédentes, qui comprend supplémentairement de l'urée, et dans laquelle éventuellement la composition comprend de 5 à 15 % en poids / poids d'urée.

6. Un procédé pour donner du silicium à des plantes, le procédé comprenant le stade d'application de la composition suivant l'une quelconque des revendications 1 à 5 aux plantes ou à leur environnement.

7. Un procédé pour augmenter l'absorption du silicium par des plantes, le procédé comprenant le stade d'application de la composition suivant l'une quelconque des revendications 1 à 5 aux plantes ou à leur environnement.

8. Un procédé de réduction du dommage physique par des nuisibles et pour empêcher ou alléger la maladie ou l'infection dans des plantes en améliorant la répartition et l'efficacité du silicium appliqué, le procédé comprenant le stade d'application de la composition suivant l'une quelconque des revendications 1 à 5 à des plantes ou à leur environnement.

9. Un procédé d'amélioration de la croissance des plantes pendant des états de stress abiotique, le procédé comprenant l'application de la composition suivant l'une quelconque des revendications 1 à 5 à la plante ou à son environnement.

10. Un procédé d'amélioration de la vitesse de croissance des plantes et éventuellement de réduction du volume du silicium nécessaire pour une réaction de croissance, le procédé comprenant appliquer la composition suivant l'une quelconque des revendications 1 à 5 à la plante ou à son environnement.

11. Un procédé suivant l'une quelconque des revendications 6 à 10, dans lequel la composition suivant l'une quelconque des revendications 1 à 5, est appliqué aux plantes ou à leur environnement à des intervalles plus grands que deux semaines.

12. Un procédé suivant l'une quelconque des revendications 6 à 10, le procédé comprenant les stades d'application d'un engrais au silicium et de la composition suivant l'une quelconque des revendications 1 à 5 aux plantes ou à leur environnement.

13. Un procédé de préparation d'une composition agricole, le procédé comprenant le stade de mélange d'une source de silicium soluble dans l'eau à du stimulant de transport de silicium comprenant une urée à substitution aryle.

14. L'utilisation d'une composition suivant l'une quelconque des revendications 1 à 5, comme engrais pour administration à des cultures.

15. L'utilisation d'un composant de diphényl urée comme stimulant de transport du silicium.
